# EUROPÄISCHE PATENTSCHRIFT

(11) **EP 3 911 615 B1**
(45) Veröffentlichungstag und Bekanntmachung des Hinweises auf die Patenterteilung: **13.07.2022**
(21) Anmeldenummer: 21716212.2
(22) Anmeldetag: 06.04.2021
(51) Int. Cl.: C04B 7/44

(54) **VERFAHREN ZUR HERSTELLUNG VON ZEMENTKLINKER**
METHOD FOR THE PRODUCTION OF CEMENT CLINKER
PROCÉDÉ DE PRODUCTION DE CLINKER DE CIMENT

(30) Priorität: 08.04.2020 BE 202005227; 08.04.2020 DE 102020204520
(43) Veröffentlichungstag der Anmeldung: 24.11.2021
(73) Patentinhaber: thyssenkrupp Industrial Solutions AG, 45143 Essen (DE)
(72) Erfinder: WILLMS, Eike, 44309 Dortmund (DE); MAIER, Oliver, 48167 Münster (DE)
(74) Vertreter: thyssenkrupp Intellectual Property GmbH
(86) Internationale Anmeldenummer: PCT/EP2021/058930
(87) Internationale Veröffentlichungsnummer: WO 2021/204797

(56) Entgegenhaltungen:
- DE-A1-102018 206 673
- US-B1- 6 383 283

## Beschreibung

Die Erfindung betrifft ein Verfahren zur Herstellung von Zementklinker.

Aus dem Stand der Technik ist es bekannt, sauerstoffhaltiges Gas zur Verbrennung von Brennstoff in den Drehrohrofen oder den Kalzinator einer Zementherstellungsanlage einzuführen. Zur Reduzierung der Abgasmenge und um auf aufwändige Reinigungsverfahren verzichten zu können, ist es beispielsweise aus der DE 10 2018 206 673 A1 bekannt, ein möglichst sauerstoffreiches Verbrennungsgas zu verwenden, sodass der CO2-Gehalt in dem Abgas hoch ist. Die DE 10 2018 206 673 A1 offenbart das Einleiten eines sauerstoffreichen Gases in den Kühlereinlassbereich zur Vorwärmung des Gases und Kühlung des Klinkers.

Als Kennzeichen der Zusammensetzung und Qualität von Zementklinker dient unter anderem der Kalkstandard. Beispielsweise liegt bei einem Kalkstandard von 95 der Anteil an Alit (Tricalciumsilikat, C3S) üblicherweise bei 60-65 % und der Anteil von Belit (Dicalciumsilikat, C2S) bei 10-20 %, wobei die Klinkermineralogie über die Rohmehlzusammensetzung und die gewählten Brennbedingungen eingestellt wird. Der aus dem oben genannten Verfahren hergestellte Zement weist üblicherweise einen erheblichen Anteil an Belit (Dicalciumsilikat) auf. Dies führt üblicherweise zu geringen Zement-Frühfestigkeiten und einem hohen Energieaufwand beim Mahlen des Zements.

Die Aufgabe der vorliegenden Erfindung liegt daher darin, die oben genannten Nachteile zu überwinden und ein Verfahren zur energieeffizienten Herstellung von Zement anzugeben, wobei der Zement optimalerweise einen hohen Anteil an Alit (Tricalciumsilikat) aufweist.

Diese Aufgabe wird erfindungsgemäß durch ein Verfahren mit den Merkmalen des unabhängigen Vorrichtungsanspruchs 1 und durch eine Vorrichtung mit den Merkmalen des unabhängigen Verfahrensanspruchs 10 gelöst. Vorteilhafte Weiterbildungen ergeben sich aus den abhängigen Ansprüchen.

Ein Verfahren zur Herstellung von Zementklinker umfasst nach einem ersten Aspekt die Schritte:
Vorwärmen von Rohmehl in einem Vorwärmer,
Kalzinieren des vorgewärmten Rohmehls in einem Kalzinator,
Brennen des vorgewärmten und kalzinierten Rohmehls in einem Ofen zu Zementklinker, wobei dem Ofen ein Verbrennungsgas mit einem Sauerstoffanteil zugeführt und die Temperatur innerhalb des Ofens ermittelt wird, und
Kühlen des Zementklinkers in einem Kühler.

Das Verfahren umfasst des Weiteren, dass die Sauerstoffzufuhr in den Ofen in Abhängigkeit der ermittelten Temperatur innerhalb des Ofens gesteuert/ geregelt wird. Unter der Sauerstoffzufuhr ist die Menge, insbesondere das Volumen, an Sauerstoff zu verstehen, die pro Zeiteinheit in den Ofen strömt.

Eine Erhöhung des Kalkstandards ist beispielsweise durch Einstellen einer höheren Temperatur in der Sinterzone bei gleicher Verweilzeit des zu brennenden Materials in dem Ofen möglich. In diesem Fall wird bei gleichen Freikalkgehalten im Produkt ein höherer Alit-Gehalt erzielt. Alit-reiche Klinker erzielen bessere Festigkeitseigenschaften im Zement im Vergleich mit Alit- ärmeren Klinkern. Da die Belit Komponente schwerer mahlbar ist als die Alit Komponente, erzeugt der höhere Alit-Gehalt darüber hinaus eine Verringerung des notwendigen elektrischen Energieaufwandes für die Zementklinkermahlung. Insbesondere der Kalkstandard ist mit dem vorangehend beschriebenen Verfahren einstellbar.

Das dem Ofen zugeführte Verbrennungsgas hat beispielsweise einen Sauerstoffanteil von mehr als 20,5%, insbesondere mehr als 30%, vorzugsweise mehr als 95%. Das Verbrennungsgas besteht beispielsweise vollständig aus reinem Sauerstoff, wobei der Sauerstoffanteil an dem Verbrennungsgas 100% beträgt. Zur Steuerung/ Regelung der Sauerstoffzufuhr wird beispielsweise der Sauerstoffanteil des Verbrennungsgases erhöht oder verringert, wobei beispielsweise der Verbrennungsgasstrom in den Ofen konstant bleibt. Es ist ebenfalls denkbar, den Verbrennungsgasstrom zu erhöhen oder zu verringern, um die Sauerstoffzufuhr in den Ofen zu erhöhen oder zu verringern. Beispielsweise wird zur Regelung/ Steuerung der Sauerstoffzufuhr in den Ofen der Verbrennungsgasstrom und/ oder der Sauerstoffanteil in dem Verbrennungsgasstrom erhöht oder verringert.

Bei dem Ofen handelt es sich vorzugsweise um einen Drehrohrofen mit einen um seine Längsachse rotierbaren Drehrohr, das vorzugsweise in Förderrichtung des zu brennenden Materials leicht geneigt ist, sodass das Material bedingt durch die Rotation des Drehrohrs und die Schwerkraft in Förderrichtung bewegt wird. Der Ofen weist vorzugsweise an seinem einen Ende einen Materialeinlass zum Einlassen von vorgewärmten Rohmehl und an seinem dem Materialeinlass gegenüberliegenden Ende einen Materialauslass zum Auslassen des gebrannten Klinkers in den Kühler auf. An dem materialauslassseitigen Ende des Ofens ist vorzugsweise der Ofenkopf angeordnet, der den Brenner zum Brennen des Materials und vorzugsweise einen Brennstoffeinlass zum Einlassen von Brennstoff in den Ofen, vorzugsweise zu dem Brenner, aufweist. Der Ofen weist vorzugsweise eine Sinterzone auf, in der das Material zumindest teilweise aufgeschmolzen wird und insbesondere eine Temperatur von 1500°C bis 1800°C, vorzugsweise 1450°C bis 1700°C aufweist. Die Sinterzone umfasst beispielsweise den Ofenkopf, vorzugsweise das in Förderrichtung des Materials hintere Drittel oder die hinteren zwei Drittel des Ofens. Die Temperatur wird vorzugsweise innerhalb der Sinterzone und/ oder des Materialeinlasses des Ofens ermittelt.

Das Verbrennungsgas wird beispielsweise vollständig oder teilweise direkt in den Ofenkopf eingeleitet, wobei der Ofenkopf beispielsweise einen Verbrennungsgaseinlass aufweist. Vorzugsweise wird das Verbrennungsgas vollständig oder teilweise über den Materialauslass des Ofens in diesen eingeführt.

An den Materialauslass des Ofens schließt sich vorzugsweise der Kühler zum Kühlen des Zementklinkers an.

Die Regelung/ Steuerung der Sauerstoffzufuhr in den Ofen in Abhängigkeit der Temperatur innerhalb des Ofens, insbesondere der Sinterzone oder dem Materialeinlass des Ofens bietet den Vorteil einer einfachen Steuerung der Ofentemperatur, wobei vorzugsweise eine stöchiometrische oder überstöchiometrische Verbrennung eingestellt wird.

Gemäß einer ersten Ausführungsform wird die Temperatur innerhalb des Ofens direkt mittels einer Temperaturmesseinrichtung oder indirekt mittels Prozessparametern, wie insbesondere der Stickoxidgehalt in dem Ofen, die Stromaufnahme des Ofens, der Sauerstoffgehalt in dem Ofen, die Brennstoffzufuhr in den Ofen, die Außentemperatur der Ofenwand und/ oder der Rohmehlzufuhr in den Vorwärmer, ermittelt. Die Prozessparameter werden vorzugsweise jeweils mittels einer jeweiligen Messeinrichtung ermittelt und vorzugsweise an eine Steuerungseinrichtung übermittelt. Die Steuerungseinrichtung ist insbesondere derart ausgebildet, dass sie aus einem oder mehreren der ermittelten Parameter die Temperatur innerhalb des Ofens ermittelt. Insbesondere ist die Steuerungseinrichtung zur Steuerung und/ oder Regelung der Temperatur ausgebildet.

Gemäß einer weiteren Ausführungsform wird die Sauerstoffzufuhr in den Ofen und in den Kalzinator derart eingestellt, dass eine überstöchiometrische, insbesondere eine nahstöchiometrische Verbrennung in dem Kalzinator und dem Ofen erfolgt. Die Summe aus der Sauerstoffzufuhr zu dem Ofen und der Sauerstoffzufuhr zu dem Kalzinator ist die Gesamtprozessmenge an Sauerstoff. Vorzugsweise ist eine Sauerstoffmesseinrichtung innerhalb des Vorwärmers angeordnet, sodass der Sauerstoffgehalt des durch den Vorwärmer strömenden Gases ermittelt wird. Vorzugsweise ist die Steuerungseinrichtung derart ausgebildet, dass sie aus dem ermittelten Sauerstoffgehalt des durch den Vorwärmer strömenden Gases die Gesamtprozessmenge an Sauerstoff ermittelt. Insbesondere wird die Aufteilung der Gesamtprozessmenge an Sauerstoff in den Kalzinator und in den Ofen vorzugsweise durch die Steuerungseinrichtung in Abhängigkeit der ermittelten Sauerstoffkonzentration in dem durch den Vorwärmer strömenden Gas gesteuert, sodass vorzugsweise in dem Ofen und Kalzinator eine nahstöchiometrische oder überstöchiometrische Verbrennung des Brennstoffs erfolgt. Die ermittelte Gesamtprozessmenge an Sauerstoff wird in Abhängigkeit der ermittelten Temperatur innerhalb des Ofens, insbesondere innerhalb der Sinterzone und/oder dem Materialeinlass des Ofens, auf den Ofen und den Kalzinator aufgeteilt. Die Steuerungseinrichtung ist vorzugsweise derart ausgebildet, dass sie die Menge an Sauerstoff, die in den Ofen und/ oder den Kalzinator strömt, derart aufteilt, dass die Summe der gesamten Sauerstoffmenge entspricht, die für eine überstöchiometrische Verbrennung notwendig ist. Vorzugsweise wird die Sauerstoffzufuhr in den Kalzinator und den Ofen zusätzlich in Abhängigkeit der dem Ofen und/ oder dem Kalzinator zugeführten Brennstoffmenge und/ oder der Menge an in den Vorwärmer aufgegebenem Rohmehl geregelt.

Die ermittelte Temperatur wird mit einem Sollwert verglichen und bei einer Abweichung der ermittelten Temperatur von dem Sollwert die Sauerstoffzufuhr in den Ofen und/ oder in den Kalzinator erhöht oder verringert. Bei dem Sollwert handelt es sich um einen Temperatursollwert, der die gewünschte Temperatur innerhalb der Sinterzone und/ oder dem Materialeinlass des Ofens darstellt.

Der Sollwert wird in Abhängigkeit der Partikelgrößenverteilung und/ oder des Kalkstandards eingestellt. Vorzugsweise sind unterschiedlichen Kalkstandards unterschiedliche Temperatursollwerte zuzuordnen. Beispielsweise beträgt der Sollwert 1360°C bis 1520°C bei einem Kalkstandard von 95 oder der Sollwert beträgt beispielsweise 1480°C bis 1620°C bei einem Kalkstandard von 100 oder der Sollwert beträgt beispielsweise 1580°C bis 1680°C bei einem Kalkstandard von 104.

Es ist ebenfalls denkbar, dass unterschiedlichen Partikelgrößenverteilungen unterschiedliche Sollwerte zugeordnet sind. Eine grobe Partikelgrößenverteilung erfordert einen höheren Sollwert verglichen mit einer feineren Partikelgrößenverteilung. Ein Rohmehl mit einer relativ groben Partikelgrößenverteilung weist beispielsweise etwa 20 %, bis 25 % oder mehr Rückstand auf 90 µm auf. Durch das Einstellen eines entsprechenden Temperatursollwerts wird gewährleistet, dass das Rohmehl bei gleicher Verweilzeit wie üblich in der Sinterzone vollständig durchreagiert, und dass sich die entsprechenden Klinkerminerale, insbesondere Alit, bilden. Dies führt zu einer erheblichen Einsparung von elektrischer Mahlenergie bei Herstellung des Zementrohmehles.

Die Zuordnung des Sollwerts zu bestimmten Partikelgrößenverteilungen und/ oder Kalkstandards ist vorzugsweise vorab bestimmt und insbesondere in der Steuerungseinrichtung hinterlegt.

Vorzugsweise wird die Gesamtprozessmenge an Sauerstoff dem Ofen zugeführt, wobei das dem Ofen zugeführte Verbrennungsgas einen Sauerstoffanteil von mehr als 95% aufweist, sodass die Verbrennung im Ofen überstöchiometrisch erfolgt und in dem Ofenabgas ein Sauerstoffanteil von 50% bis 70% aufweist. Das Ofenabgas wird anschließend dem Kalzinator zugeleitet und bildet vollständig das Verbrennungsgas des Kalzinators.

Es ist ebenfalls denkbar, dass dem Ofen lediglich ein Teil der Gesamtprozessmenge an Sauerstoff zugeführt wird und das Verbrennungsgas des Kalzinators lediglich teilweise aus dem Ofenabgas gebildet wird und ein Teil des Verbrennungsgases dem Kalzinator direkt zugeführt wird.

In den beiden voran genannten Fällen ist die Steuerungseinrichtung wie folgt eingerichtet. Überschreitet die ermittelte Temperatur den Sollwert, wird vorzugsweise die Menge an Verbrennungsgas und/oder die Menge an Sauerstoff in dem Verbrennungsgas, erhöht. Unterschreitet die ermittelte Temperatur den Sollwert, wird die Menge an Verbrennungsgas, und/oder die Menge an Sauerstoff in dem Verbrennungsgas, bei einem Unterschreiten des Sollwerts durch die ermittelte Temperatur verringert. Eine zu hohe Menge an Verbrennungsgas sorgt nach einer Erkenntnis der Erfinder dafür, dass die Temperatur innerhalb des Ofens fällt, da das Ofeninnere durch das überschüssige Verbrennungsgas, das in dem Brennprozess nicht umgesetzt wird, gekühlt wird.

Dem Ofen wird gemäß einer weiteren Ausführungsform ein Brennstoff zugeführt und die Zufuhr des Brennstoffs wird in Abhängigkeit der ermittelten Temperatur innerhalb des Ofens geregelt. Vorzugsweise wird die Brennstoffzufuhr erhöht oder verringert, wenn die ermittelte Temperatur von dem vorabbestimmten Sollwert abweicht. Überschreitet die ermittelte Temperatur den vorabbestimmten Sollwert, wird die Brennstoffzufuhr beispielsweise verringert. Unterschreitet die ermittelte Temperatur den vorabbestimmten Sollwert, wird die Brennstoffzufuhr beispielsweise erhöht. Es ist ebenfalls denkbar, dass die Brennstoffzufuhr in Abhängigkeit im Ofeneinlauf ermittelten Temperatur und/ der Menge an Stickoxiden in dem Vorwärmerabgas geregelt wird.

Gemäß einer weiteren Ausführungsform weist der Kühler einen Kühlgasraum auf, durch den ein Kühlgasstrom zum Kühlen des Schüttguts im Querstrom strömbar ist, wobei der Kühlgasraum einen ersten Kühlgasraumabschnitt mit einem ersten Kühlgasstrom und einen sich in Förderrichtung des Klinkers an diesen anschließenden zweiten Kühlgasraumabschnitt mit einem zweiten Kühlgasstrom umfasst, wobei das dem Ofen zugeführte Verbrennungsgas vollständig oder teilweise durch den ersten Kühlgasstrom gebildet wird und wobei die Zufuhr des Verbrennungsgases in Abhängigkeit der ermittelten Temperatur innerhalb des Ofens geregelt wird. Vorzugsweise wird die Zufuhr des Verbrennungsgases erhöht oder verringert, wenn die ermittelte Temperatur von dem vorabbestimmten Sollwert abweicht. Überschreitet die ermittelte Temperatur den vorabbestimmten Sollwert, wird die Zufuhr des Verbrennungsgases beispielsweise verringert. Unterschreitet die ermittelte Temperatur den vorabbestimmten Sollwert, wird die Zufuhr des Verbrennungsgases beispielsweise erhöht

Der Kühler weist eine Fördereinrichtung zum Fördern des Schüttguts in Förderrichtung durch den Kühlgasraum auf. Der Kühlgasraum umfasst einen ersten Kühlgasraumabschnitt mit einem ersten Kühlgasstrom und einen sich in Förderrichtung des Schüttguts an diesen anschließenden zweiten Kühlgasraumabschnitt mit einem zweiten Kühlgasstrom. Der Kühlgasraum ist vorzugsweise nach oben durch eine Kühlgasraumdecke und nach unten durch einen dynamischen und/ oder statischen Rost, vorzugsweise das auf diesem liegende Schüttgut, begrenzt. Bei dem Kühlgasraum handelt es sich insbesondere um den gesamten von Kühlgas durchströmte Raum des Kühlers oberhalb des Schüttguts. Der Kühlgasstrom strömt durch den dynamischen und/ oder statischen Rost, insbesondere durch die Fördereinrichtung, durch das Schüttgut und in den Kühlgasraum. Der erste Kühlgasraumabschnitt ist vorzugsweise in Strömungsrichtung des zu kühlenden Schüttguts direkt hinter dem Kühlereinlass, insbesondere dem Materialauslass des Ofens, angeordnet. Vorzugsweise fällt der Klinker aus dem Ofen in den ersten Kühlgasraumabschnitt.

Der erste Kühlungsraumabschnitt weist vorzugsweise einen statischen Rost und/ oder dynamischen Rost auf, der unterhalb des Materialauslasses des Ofens angeordnet ist, sodass der aus dem Ofen austretende Klinker schwerkraftbedingt auf den statischen Rost fällt. Bei dem statischen Rost handelt es sich beispielsweise um ein in einem Winkel zur Horizontalen von 10° bis 35°, vorzugsweise 12° bis 33°, insbesondere 13° bis 21° angestellten Rost, der von unten mit dem ersten Kühlgasstrom durchströmt wird. In den ersten Kühlgasraumabschnitt strömt vorzugsweise ausschließlich der erste Kühlgasstrom, der beispielsweise mittels eines Ventilators beschleunigt wird. Der zweite Kühlgasraumabschnitt schließt sich in Förderrichtung des Schüttguts an den ersten Kühlgasraumabschnitt an und wird vorzugsweise von dem ersten Kühlgasraumabschnitt mittels einer Trennvorrichtung gastechnisch getrennt. In den zweiten Kühlgasraumabschnitt strömt vorzugsweise ausschließlich der zweite Kühlgasstrom, der beispielsweise mittels eines Ventilators beschleunigt wird.

Der zweite Kühlgasraumabschnitt weist vorzugsweise einen dynamischen Rost zur Förderung des Schüttguts durch den Kühlgasraum auf. Der dynamische Rost umfasst eine Fördereinheit zum Transport des Materials in Förderrichtung, wobei die Fördereinheit beispielsweise einen von Kühlgas durchströmbaren Belüftungsboden mit einer Mehrzahl von Durchlassöffnungen zum Einlassen von Kühlgas aufweist. Das Kühlgas wird beispielsweise von unterhalb des Belüftungsbodens angeordneten Ventilatoren bereitgestellt, sodass das zu kühlende Schüttgut im Querstrom zur Förderrichtung mit einem Kühlgas, wie beispielsweise Kühlgas, durchströmt wird. Der Belüftungsboden bildet vorzugsweise eine Ebene aus, auf der das Schüttgut aufliegt. Die Fördereinheit weist des Weiteren vorzugsweise eine Mehrzahl von in Förderrichtung und entgegen der Förderrichtung bewegbaren Förderelementen auf. Vorzugsweise wird der Belüftungsboden teilweise oder vollständig durch Förderelemente ausgebildet, die nebeneinander angeordnet, eine Ebene zur Aufnahme des Schüttguts ausbilden.

Bei dem durch den ersten Kühlgasraumabschnitt strömenden ersten Kühlgasstrom handelt es sich beispielsweise um reinem Sauerstoff oder einem Gas mit einem Anteil von weniger als 35 Vol%, insbesondere weniger als 21 Vol%, vorzugsweise 15 Vol% oder weniger Stickstoff und/oder Argon und/ oder einem Sauerstoffanteil von mehr als 20,5%, insbesondere mehr als 30%, vorzugsweise mehr als 95%. Der erste Kühlgasraumabschnitt schließt sich vorzugsweise direkt an den Materialauslass des Ofens, vorzugsweise den Ofenkopf des Ofens an, sodass das Kühlgas in dem Kühler erwärmt und anschließend in den Drehrohrofen strömt und als Verbrennungsgas verwendet wird. Bei dem zweiten Kühlgasstrom handelt es sich beispielsweise um Luft.

Der Kühler weist vorzugsweise eine Trennvorrichtung zur gastechnischen Trennung der Kühlgasraumabschnitte voneinander auf.

Gemäß einer weiteren Ausführungsform weist der Ofen eine Mehrzahl von Verbrennungsgaseinlässen auf, durch welche das Verbrennungsgas in den Ofen eingeleitet wird, wobei die Zufuhr von Verbrennungsgas zu den jeweiligen Verbrennungsgaseinlässen jeweils in Abhängigkeit der ermittelten Temperatur innerhalb des Ofens geregelt wird. Vorzugsweise sind die Verbrennungsgaseinlässe in der Sinterzone des Ofens angeordnet oder mit dieser über Leitungen oder Führungsmittel verbunden. Die Zufuhr von Verbrennungsgas wird beispielsweise über Mittel zur Zufuhr, wie Klappen, Blenden oder Drosseln eingestellt.

Gemäß einer weiteren Ausführungsform wird die Brennstoffmenge, die in den Ofen und den Kalzinator aufgegeben wird, der Anteil an Stickoxiden in dem Ofenabgas, der Anteil an Sauerstoff in dem Ofenabgas, die Menge an in den Vorwärmer aufgegebenes Rohmehl ermittelt und die Sauerstoffzufuhr zu dem Ofen und/ oder dem Kalzinator in Abhängigkeit von zumindest einem der ermittelten Werte geregelt.

Vorzugsweise beträgt die Materialtemperatur innerhalb der Sinterzone 1450°C bis 1800°C, vorzugsweise 1500°C bis 1700°C. Die Gastemperatur, insbesondere die Temperatur an der Innenseite der Ofenwand, beträgt innerhalb der Sinterzone vorzugweise 2000°C bis 2600°C, vorzugsweise 2100°C bis 2500°C. Zur Ermittlung der Position der Sinterzone des Ofens wird beispielsweise die Außentemperatur der Ofenwand an einer Mehrzahl von Messpunkten ermittelt und vorzugsweise ein Temperaturprofil über die Außenwand des Ofens erstellt.

Das Ermitteln der Temperatur innerhalb des Ofens umfasst gemäß einer weiteren Ausführungsform das Ermitteln der Temperatur der Gasphase, der Wandinnenfläche und/oder des Klinkers innerhalb der Sinterzone und/ oder des Materialeinlasses des Ofens, wobei die Ermittlung der Temperatur beispielsweise kontaktlos erfolgt. Es ist ebenfalls denkbar, die Temperatur über ein Thermoelement zu ermittelt.

Die Temperatur innerhalb des Ofens wird vorzugsweise mittels einer oder mehreren Temperaturmesseinrichtungen ermittelt, die in der Sinterzone und/oder dem Materialeinlass des Ofens angebracht sind. Bei der Temperaturmesseinrichtung handelt es sich beispielsweise um ein Pyrometer. Das Pyrometer ist vorzugsweise derart ausgebildet, dass die Temperaturmessung kontaktlos durchgeführt ist, wobei die Messeirichtung vorzugsweise im kurzwelligen und mittelwelligen Lichtbereich arbeitet. Beispielsweise ist die Messeinrichtung derart ausgebildet, dass sie die Temperatur der Innenseite der Ofenwand und/ oder des Klinkers innerhalb des Ofens ermittelt. Bei der Messeinrichtung handelt es sich beispielsweise um eine Infrarotmesseinrichtung (NIR, MIR).

Die Erfindung umfasst auch eine Zementherstellungsanlage aufweisend
- einen Vorwärmer zum Vorwärmen von Rohmehl,
- einen Kalzinator zum Kalzinieren des vorgewärmten Rohmehls,
- einen Ofen zum Bennen des Rohmehls zu Zementklinker, wobei der Ofen eine Temperaturmesseinrichtung zur Ermittlung der Temperatur innerhalb des Ofens und einen Verbrennungsgaseinlass zum Einlassen eines Verbrennungsgases mit einem Sauerstoffanteil in den Ofen aufweist, und
- einen Kühler zum Kühlen des Zementklinkers.

Die Zementherstellungsanlage weist des Weiteren eine Steuerungseinrichtung auf, die mit der Temperaturmesseinrichtung und dem Verbrennungsgaseinlass verbunden ist und derart ausgebildet ist, dass sie die Sauerstoffzufuhr in den Ofen in Abhängigkeit der ermittelten Temperatur innerhalb des Ofens steuert.

Die voran beschriebenen Ausführungen und Vorteile des Verfahrens zur Herstellung von Zementklinker treffen in vorrichtungsgemäßer Entsprechung auch auf die Zementherstellungsanlage zu.

Vorzugsweise umfasst der Verbrennungsgaseinlass Mittel zum Regeln des Verbrennungsgasstroms in den Ofen, wie beispielsweise eine Klappe, Blende, Drossel, Ventile oder einen Ventilator zum Beschleunigen des Verbrennungsgases in den Ofen. Die Steuerungseinrichtung ist insbesondere mit dem Mittel verbunden, sodass sie den Verbrennungsgasstrom in den Ofen steuert/ regelt.

Gemäß einer weiteren Ausführungsform weist der Vorwärmer eine mit der Steuerungseinrichtung verbundene Sauerstoffmesseinrichtung zum Ermitteln des Sauerstoffgehalts des durch den Vorwärmer strömenden Gases auf und wobei die Steuerungseinrichtung derart ausgebildet ist, dass sie die Sauerstoffzufuhr zu dem Kalzinator und dem Ofen derart steuert, dass in dem Ofen und dem Kalzinator eine stöchiometrische oder überstöchiometrische, insbesondere nahstöchiometrische Verbrennung erfolgt. Insbesondere ist die Sauerstoffmesseinrichtung in Strömungsrichtung des Gases in dem Vorwärmer vor der letzten Zyklonstufe angeordnet. Bei der ersten Zyklonstufe handelt es sich um die oberste Zyklonstufe, in die das Rohmehl aufgegeben wird. Die letzte Zyklonstufe befindet sich direkt vor dem Materialeinlass des Ofens. Es ist ebenfalls denkbar, dass die Sauerstoffmesseinrichtung nach dem zweiten Zyklon, vorzugsweise nach dem Kalzinator, angeordnet ist. Die Sauerstoffmesseinrichtung kann auch dem Vorwärmer nachgeschaltet sein.

Die Steuerungseinrichtung ist vorzugsweise mit der Sauerstoffmesseinrichtung derart verbunden, dass die Sauerstoffmesseinrichtung die ermittelte Sauerstoffkonzentration an die Steuerungseinrichtung übermittelt. Die Steuerungseinrichtung ist vorzugsweise derart ausgebildet, dass sie die ermittelte Sauerstoffkonzentration mit einem vorab bestimmten Sollwert vergleicht und bei einer Abweichung der Sauerstoffkonzentration vom Sollwert die Sauerstoffzufuhr zum Kalzinator und/ oder zum Ofen erhöht oder verringert. Beispielsweise ist die Steuerungseinrichtung derart ausgebildet, dass sie die Sauerstoffzufuhr in den Kalzinator und/ oder den Ofen erhöht, wenn die ermittelte Sauerstoffkonzentration den Sollwert unterschreitet. Beispielsweise ist die Steuerungseinrichtung derart ausgebildet, dass sie die Sauerstoffzufuhr in den Kalzinator und/ oder den Ofen verringert, wenn die ermittelte Sauerstoffkonzentration den Sollwert überschreitet.

Die Steuerungseinrichtung ist derart ausgebildet, dass sie die ermittelte Temperatur in dem Ofen mit einem Sollwert vergleicht und bei einer Abweichung der ermittelten Temperatur von dem Sollwert die Sauerstoffzufuhr in den Ofen und/ oder in den Kalzinator erhöht oder verringert. Beispielsweise ist die Steuerungseinrichtung derart ausgebildet, dass sie die Sauerstoffzufuhr erhöht, wenn die ermittelte Temperatur den Sollwert überschreitet. Beispielsweise ist die Steuerungseinrichtung derart ausgebildet, dass sie die Sauerstoffzufuhr erhöht, wenn die ermittelte Temperatur den Sollwert überschreitet. Der Sollwert wird in Abhängigkeit der Partikelgrößenverteilung und/ oder des Kalkstandards eingestellt.

Gemäß einer weiteren Ausführungsform weisen der Kalzinator und der Ofen jeweils ein oder mehrere Mittel zur Zuführung von Brennstoff in jeweils den Ofen und den Kalzinator auf, wobei die Steuerungseinrichtung mit dem mindestens einen Mittel verbunden und derart ausgebildet ist, dass sie die Zufuhr an Brennstoff in den Kalzinator und/ oder den Ofen in Abhängigkeit der ermittelten Temperatur innerhalb des Ofens steuert. Bei dem mindestens einen Mittel handelt es sich beispielsweise um eine Brennstoffleitung mit einer Klappe, Drossel oder einem Ventil, das die Durchstrommenge an Brennstoff durch die Leitung einstellt. Beispielsweise ist die Steuerungseinrichtung derart ausgebildet, dass sie die Brennstoffzufuhr verringert, wenn die ermittelte Temperatur den Sollwert überschreitet. Insbesondere ist die Steuerungseinrichtung derart ausgebildet, dass sie die Brennstoffzufuhr erhöht, wenn die ermittelte Temperatur den Sollwert unterschreitet. Gemäß einer weiteren Ausführungsform weist der Ofen eine Mehrzahl von Verbrennungsgaseinlässen auf, durch welche das Verbrennungsgas in den Ofen eingeleitet wird, wobei die Steuerungseinrichtung derart ausgebildet ist, dass sie die Zufuhr von Verbrennungsgas zu den jeweiligen Verbrennungsgaseinlässen jeweils in Abhängigkeit der ermittelten Temperatur innerhalb des Ofens steuert.

Die Temperaturmesseinrichtung ist gemäß einer weiteren Ausführungsform derart ausgebildet, eine kontaktlose Temperaturmessung der Innenfläche der Ofenwand und/oder des Klinkers innerhalb der Sinterzone durchzuführen.

### Beschreibung der Zeichnungen

Die Erfindung ist nachfolgend anhand mehrerer Ausführungsbeispiele mit Bezug auf die beiliegenden Figuren näher erläutert.
- Fig. 1: zeigt eine schematische Darstellung einer Zementherstellungsanlage mit einer Steuerungseinrichtung gemäß einem Ausführungsbeispiel.
- Fig. 2: zeigt eine schematische Darstellung einer Zementherstellungsanlage mit einer Steuerungseinrichtung gemäß einem weiteren Ausführungsbeispiel.

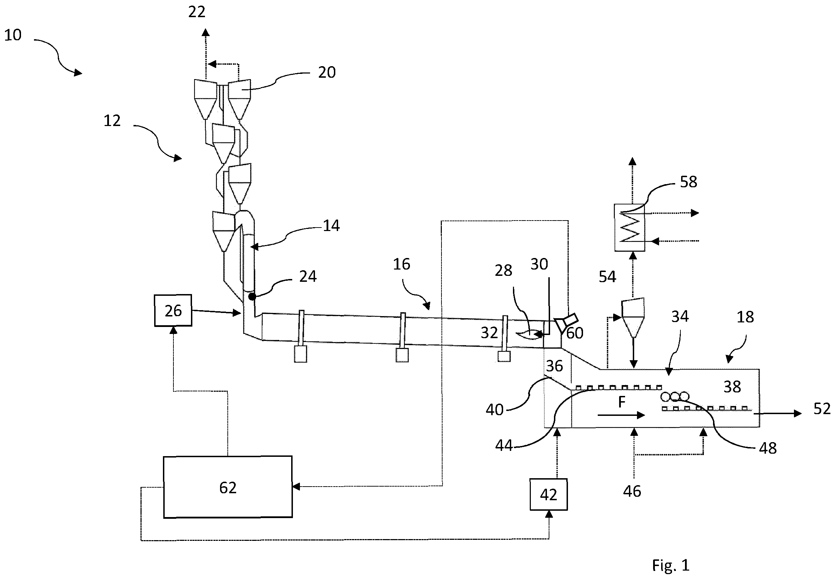

Fig. 1 zeigt eine Zementherstellungsanlage 10 mit einem einsträngigen Vorwärmer 12 zur Vorwärmung von Rohmehl, einen Kalzinator 14 zum Kalzinieren des Rohmehls, einen Ofen 16, insbesondere einen Drehrohrofen zum Brennen des Rohmehls zu Klinker und einen Kühler 18 zum Kühlen des in dem Ofen 16 gebrannten Klinkers.

Der Vorwärmer 12 umfasst eine Mehrzahl von Zyklonen 20 zum Abscheiden des Rohmehls aus dem Rohmehlgasstrom. Beispielhaft weist der Vorwärmer 12 fünf Zyklone 20 auf, die in vier Zyklonstufen untereinander angeordnet sind. Der Vorwärmer 12 weist einen nicht dargestellten Materialeinlass zum Einlassen von Rohmehl in die zwei Zyklone 20 umfassende, oberste Zyklonstufe des Vorwärmers 12 auf. Das Rohmehl durchströmt nacheinander die Zyklone 20 der Zyklonstufen im Gegenstrom zu dem Ofen- und/oder Kalzinatorabgas und wird dadurch erwärmt. Zwischen der letzten und der vorletzten Zyklonstufe ist der Kalzinator 14 angeordnet. Der Kalzinator 14 weist ein Steigrohr mit mindestens einer Brennstelle zum Erhitzen des Rohmehls auf, sodass eine Kalzinierung des Rohmehls in dem Kalzinator 14 erfolgt. Des Weiteren weist der Kalzinator 14 einen Brennstoffeinlass 24 zum Einlassen von Brennstoff in das Steigrohr auf. Der Kalzinator 14 weist auch einen Verbrennungsgaseinlass 26 zum Einlassen von Verbrennungsgas in das Steigrohr des Kalzinators 14 auf. Bei dem Verbrennungsgas handelt es sich beispielsweise um Luft, mit Sauerstoff angereicherte Luft, reinen Sauerstoff oder ein Gas mit einem Sauerstoffanteil von mindestens 85%. Das Kalzinatorabgas wird in den Vorwärmer 12, vorzugsweise in die vorletzte Zyklonstufe eingeleitet und verlässt den Vorwärmer 12 hinter der obersten Zyklonstufe als Vorwärmerabgas 22.

In Strömungsrichtung des Rohmehls ist dem Vorwärmer 12 der Ofen 16 nachgeschaltet, sodass das in dem Vorwärmer 12 vorgewärmte und in dem Kalzinator 14 kalzinierte Rohmehl in den Ofen 16 strömt. Der Materialeinlass 25 des Ofens 16 ist direkt mit dem Steigrohr des Kalzinators 14 verbunden, sodass das Ofenabgas in den Kalzinator 14 und anschließend in den Vorwärmer 12 strömt. Bei dem Ofen 16 handelt es sich beispielhaft um einen Drehrohrofen mit einem um seine Längsachse rotierbaren Drehrohr, das in einem leicht abfallenden Winkel angeordnet ist. Der Ofen 12 weist an dem materialauslasseitigen Ende innerhalb des Drehrohrs einen Brenner 28 und einen zugehörigen Brennstoffeinlass 30 auf. Der Materialauslass des Ofens 16 ist an dem dem Materialeinlass 25 gegenüberliegenden Ende des Drehrohrs angeordnet, sodass das Rohmehl innerhalb des Drehrohrs durch die Rotation des Drehrohrs in Richtung des Brenners 28 und des Materialauslasses gefördert wird. Das Rohmehl wird innerhalb des Ofens 16 zu Zementklinker gebrannt, wobei das Rohmehl im Drehofen im Wesentlichen die Klinkerbildungsphasen durchläuft und in Mehlflussrichtung im etwa letzten Drittel des Ofens C3S gebildet wird. Dabei bildet sich im letzten Drittel des Ofens dauerhaft eine bis zu etwa 250mm dicke Schicht aus hartem Ansatz aus, der chemisch / mineralogisch betrachtet Zementklinker entspricht. Der Bereich des Ofens 16, in dem C3S gebildet wird, wird im Folgenden als Sinterzone 32 bezeichnet. Die Sinterzone 32 umfasst den materialauslassseitigen, hinteren Bereich des Drehrohrs, vorzugsweise das in Materialströmungsrichtung hintere Drittel, insbesondere die hinteren zwei Drittel des Drehrohrs. Vorzugsweise ist die Sinterzone 32 der Bereich des Ofens 16, in dem die Temperatur etwa 1450°C bis 1800°C, vorzugsweise 1500°C bis 1700°C beträgt.

An den Materialauslass des Ofens 16 schließt sich der Kühler 18 zum Kühlen des Klinkers an. Der Kühler 18 weist einen Kühlgasraum 34 auf, in dem der Klinker durch einen Kühlgasstrom gekühlt wird. Der Klinker wird In Förderrichtung F durch den Kühlgasraum 34 gefördert. Der Kühlgasraum 34 weist einen ersten Kühlgasraumabschnitt 36 und einen zweiten Kühlgasraumabschnitt 38 auf, der sich in Förderrichtung F an den ersten Kühlgasraumabschnitt 36 anschließt. Der Ofen 16 ist über den Materialauslass des Ofens 16 mit dem Kühler 18 verbunden, sodass der in dem Drehrohrofen 20 gebrannte Klinker in den Kühler 18 fällt.

Der erste Kühlgasraumabschnitt 36 ist unterhalb des Materialauslasses des Ofens 16 angeordnet, sodass der Klinker von dem Ofen 16 in den ersten Kühlgasraumabschnitt 36 fällt. Der erste Kühlgasraumabschnitt 36 stellt einen Einlaufbereich des Kühlers 18 dar und weist vorzugsweise einen statischen Rost 40 auf, der den aus dem Ofen 16 austretenden Klinker aufnimmt. Der statische Rost 40 ist insbesondere vollständig in dem ersten Kühlgasraumabschnitt 36 des Kühlers 10 angeordnet. Vorzugsweise fällt der Klinker aus dem Ofen 16 direkt auf den statischen Rost 40. Der statische Rost 40 erstreckt sich vorzugsweise vollständig in einem Winkel von 10° bis 35°, vorzugsweise 14° bis 33°, insbesondere 21 bis 25 zur Horizontalen, sodass der Klinker in Förderrichtung entlang des statischen Rostes 40 auf diesem gleitet.

An den ersten Kühlgasraumabschnitt 36, schließt sich der zweiter Kühlgasraumabschnitt 38 des Kühlers 18 an. In dem ersten Kühlgasraumabschnitt 36 des Kühlers 18 wird der Klinker insbesondere auf eine Temperatur von weniger als 1100°C abgekühlt, wobei die Abkühlung derart erfolgt, dass ein vollständiges Erstarren von in dem Klinker vorhandenen flüssigen Phasen in feste Phasen erfolgt. Beim Verlassen des ersten Kühlgasraumabschnitt 36 des Kühlers 18 liegt der Klinker vorzugsweise vollständig in der festen Phase und einer Temperatur von maximal 1100°C vor. In dem zweiten Kühlgasraumabschnitt 38 des Kühlers 18 wird der Klinker weiter abgekühlt, vorzugsweise auf eine Temperatur von weniger als 100°C. Vorzugsweise kann der zweite Kühlgasstrom auf mehrere Teilgasströme aufgeteilt werden, die unterschiedliche Temperaturen aufweisen.

Der statische Rost des ersten Kühlgasraumabschnitts 36 weist beispielsweise Durchlässe auf, durch welche ein Kühlgas in den Kühler 18 und den Klinker eintritt. Das Kühlgas wird beispielsweise durch wenigstens einen unterhalb des statischen Rosts 40 angeordneten Ventilator erzeugt, sodass ein erster Kühlgasstrom 42 von unten durch den statischen Rost in den ersten Kühlgasraumabschnitt 36 strömt. Bei dem ersten Kühlgasstrom 42 handelt es sich beispielsweise um reinen Sauerstoff oder ein Gas mit einem Anteil von 15 Vol% oder weniger Stickstoff und einem Anteil von 50 Vol% oder mehr Sauerstoff. Der erste Kühlgasstrom 42 durchströmt den Klinker und strömt anschließend in den Ofen 16. Der erste Kühlgasstrom bildet beispielsweise teilweise oder vollständig das Verbrennungsgas des Ofens 16 aus. Der hohe Anteil an Sauerstoff in dem Verbrennungsgas führt zu einem Vorwärmerabgas, das im Wesentlichen aus CO2 und Wasserdampf besteht, und weist den Vorteil auf, dass auf aufwändige nachgeschaltete Reinigungsverfahren zur Abgasreinigung verzichtet werden kann. Des Weiteren wird eine Reduktion der Prozessgasmengen erreicht, sodass die Anlage erheblich kleiner dimensioniert werden kann.

Innerhalb des Kühlers 18 wird der zu kühlende Klinker in Förderrichtung F bewegt. Der zweite Kühlgasraumabschnitt 38 weist vorzugsweise einen dynamischen, insbesondere bewegbaren, Rost 44 auf, der sich in Förderrichtung F an den statischen Rost 40 anschließt. Der dynamische Rost 44 weist insbesondere eine Fördereinheit auf, die den Klinker in Förderrichtung F transportiert. Bei der Fördereinheit handelt es sich beispielsweise um einen Schubbodenförderer, der eine Mehrzahl von Förderelementen zum Transport des Schüttguts aufweist. Bei den Förderelementen handelt es sich bei einem Schubbodenförderer um eine Mehrzahl von Planken, vorzugsweise Rostplanken, die einen Belüftungsboden ausbilden. Die Förderelemente sind nebeneinander angeordnet und in Förderrichtung F und entgegen der Förderrichtung F bewegbar. Die als Förderplanken oder Rostplanken ausgebildeten Förderelemente sind vorzugsweise von Kühlgasstrom durchströmbar, über die gesamte Länge des zweiten Kühlgasraumabschnitt 38 des Kühlers 18 angeordnet und bilden die Oberfläche aus, auf der der Klinker aufliegt. Die Fördereinheit kann auch ein Schubförderer sein, wobei die Fördereinheit einen stationären von Kühlgasstrom durchströmbaren Belüftungsboden und eine Mehrzahl von relativ zu dem Belüftungsboden bewegbaren Förderelementen aufweist. Die Förderelemente des Schubförderers sind vorzugsweise oberhalb des Belüftungsbodens angeordnet und weisen quer zur Förderrichtung verlaufende Mitnehmer auf. Zum Transport des Klinkers entlang des Belüftungsbodens sind die Förderelemente in Förderrichtung F und entgegen der Förderrichtung F bewegbar. Die Förderelemente des Schubförderers und des Schubbodenförderers können nach dem "walking-floor-Prinzip" bewegbar sein, wobei die Förderelemente alle gleichzeitig in Förderrichtung und ungleichzeitig entgegen der Förderrichtung bewegt werden. Alternativ dazu sind auch andere Förderprinzipien aus der Schüttguttechnik denkbar.

Unterhalb des dynamischen Rosts 44 sind beispielhaft eine Mehrzahl von Ventilatoren angeordnet, mittels welcher der zweite Kühlgasstrom 46 von unten durch den dynamischen Rost 44 geblasen wird. Bei dem zweiten Kühlgasstrom 46 handelt es sich beispielsweise um Luft.

An den dynamischen Rost 44 des zweiten Kühlgasraumabschnitts 38 schließt sich in Fig. 1 beispielhaft eine Zerkleinerungseinrichtung 48 an. Bei der Zerkleinerungseinrichtung 48 handelt es sich beispielsweise um einen Brecher mit zumindest zwei gegenläufig rotierbaren Brechwalzen und einem zwischen diesen ausgebildeten Brechspalt, in dem die Zerkleinerung des Materials stattfindet. An die Zerkleinerungseinrichtung 48 ein weiterer dynamischer Rost 50 unterhalb der Zerkleinerungseinrichtung 48 an. Vorzugsweise weist der Kaltklinker 52 beim Verlassen des Kühlers 18 eine Temperatur von 100°C oder weniger auf.

Aus dem zweiten Kühlgasraumabschnitt 38 wird beispielsweise Kühlerabluft 54 abgeführt und in einen Abscheider 56, wie beispielsweise einen Zyklon, zum Abscheiden von Feststoffen geführt. Die Feststoffe werden beispielhaft dem Kühler 18 wieder zugeführt. Dem Abscheider 56 ist ein Luft-Luft Wärmetauscher 58 nachgeschaltet, sodass die Kühlabluft innerhalb des Wärmetauschers 58 Luft vorwärmt, die beispielsweise einer Rohmühle zugeführt wird.

Innerhalb des Ofens 16, vorzugsweise innerhalb der Sinterzone 32 des Ofens 16 ist eine Temperaturmesseinrichtung 60 zum Ermitteln der Temperatur des Gases und/ oder des Klinkers innerhalb des Ofens 16 angeordnet. Die Temperaturmesseinrichtung 60 ist mit einer Steuerungseinrichtung 62 verbunden, sodass die ermittelten Temperaturdaten an die Steuerungseinrichtung 62 übermittelt werden. Die Steuerungseinrichtung 62 ist mit dem Verbrennungsgaseinlass 26 des Kalzinators 14 verbunden zum Steuern/Regeln der Menge an Verbrennungsgas, die in den Kalzinator 14 strömt. Vorzugsweise ist die Steuerungseinrichtung 62 derart ausgebildet, dass sie die Menge des in den ersten Kühlgasraumabschnitt 36 des Kühlers 18 eintretenden ersten Kühlgasstrom 42 steuert/ regelt. Die Steuerungseinrichtung 62 ist insbesondere derart ausgebildet, dass sie die Menge an Verbrennungsluft in den Ofen und/ oder die Menge an Verbrennungsluft in den Kalzinator 14 vorzugsweise in Abhängigkeit der ermittelten Temperatur innerhalb des Ofens 16, insbesondere innerhalb der Sinterzone 32, steuert/ regelt. Insbesondere ist die Steuerungseinrichtung 62 derart ausgebildet, dass sie die Menge an Sauerstoff, die dem Kalzinator 14 und/ oder dem Ofen 16 zugeführt wird steuert/ regelt. Die Menge an Sauerstoff zu dem Kalzinator 14 oder dem Ofen 16 wird beispielsweise über die Menge an Verbrennungsgas oder den Sauerstoffanteil in dem Verbrennungsgas eingestellt. Vorzugsweise ist die Steuerungseinrichtung 62 mit einem oder einer Mehrzahl von Ventilatoren zur Beschleunigung des Verbrennungsgases des Ofens 16 und/ oder des Kalzinators 14 verbunden, sodass die Steuerungseinrichtung beispielsweise die Drehzahl des Ventilators steuert/ regelt

Es ist ebenfalls denkbar, dass die Steuerungseinrichtung 62 mit einem jeweiligen Einlass zum Einlassen von Verbrennungsgas in den Kalzinator 14 oder den Ofen 16, derart verbunden ist, dass sie die Öffnungsgröße des jeweiligen Einlasses steuert/ regelt. Es ist ebenfalls denkbar, dass die Steuerungseinrichtung 62 mit einer Sauerstoffleitung zum Leiten von Sauerstoff in das Verbrennungsgas verbunden ist und die Menge an durch die Leitung in das Verbrennungsgas strömenden Sauerstoff steuert/ regelt. Der Sauerstoff wird vorzugsweise aus einem Druckbehälter entweder in gasförmiger oder flüssiger Form bereitgestellt. Aus einer flüssigen Sauerstoffquelle wird das Gas beispielsweise in einen Verdampfer geleitet und dort in die flüssige Phase überführt. Bei gasförmiger Bereitstellung entweder aus dem Verdampfer oder einer gasförmigen Quelle unter Druck wird vorzugsweise ein Vordruck erzeugt, sodass nur noch eine geringe Kompressions- / Beschleunigungsarbeit durch einen Ventilator oder Kompressor / Verdichter erzeugt werden muss. Vorzugsweise wird die Leitung zu den jeweiligen Einlässen in dem Ofen durch ein oder mehrere Ventile eingestellt. In der Strecke sind beispielsweise Mittel zur Messung des Durchflusses an Sauerstoff vorgesehen.

Vorzugsweise ist die Steuerungseinrichtung 62 derart ausgebildet, dass sie die ermittelte Temperatur innerhalb der Sinterzone 32 des Ofens 16 mit einem vorabbestimmten Sollwert vergleicht und bei einer Abweichung der ermittelten Temperatur von dem Sollwert die Menge an Verbrennungsgas, insbesondere die Menge an Sauerstoff, die in den Ofen 16 und/ oder den Kalzinator 14 strömt, erhöht oder verringert. Beispielsweise ist die Steuerungseinrichtung 62 derart ausgebildet, dass sie die Menge an Verbrennungsgas, insbesondere die Menge an Sauerstoff in dem Verbrennungsgas, bei einem Überschreiten des Sollwerts durch die ermittelte Temperatur erhöht. Vorzugsweise ist die Steuerungseinrichtung 62 derart ausgebildet, dass sie die Menge an Verbrennungsgas, insbesondere die Menge an Sauerstoff in dem Verbrennungsgas, bei einem Unterschreiten des Sollwerts durch die ermittelte Temperatur verringert. Eine zu hohe Menge an Verbrennungsgas sorgt nach einer Erkenntnis der Erfinder dafür, dass die Temperatur innerhalb des Ofens 16 fällt, da das Ofeninnere durch das überschüssige Verbrennungsgas, das in dem Brennprozess nicht umgesetzt wird, gekühlt wird. Dabei ist grundsätzlich von einer überstöchiometrischen Verbrennung auszugehen.

Eine solche Steuerung/ Regelung der Ofentemperatur ermöglicht die Herstellung eines Klinkers mit einem gewünschten Anteil an Alit auf eine einfache Art und Weise.

Der vorabbestimmte Sollwert der Temperatur innerhalb des Ofens, insbesondere innerhalb der Sinterzone 32, erlaubt das Einstellen eines hohen Kalkstandards im Rohmehl und daraus resultierend im Zementklinker und ist somit maßgeblich für die Produktqualität verantwortlich. Trotz eines hohen Kalkstandards von z.B. über 100-105 kann durch die höheren Sinterzonentemperaturen als üblich eine vollständige oder nahezu vollständige Umsetzung von Belit mit Calciumoxid zu Alit erfolgen. Der daraus resultierende Zementklinker hat einen Anteil an Alit von mindestens 65 %, insbesondere mehr als 75 %, vorzugsweise aber bis zu 85 %, während die Anteile an Belit und nicht umgesetztem Calciumoxid (Freikalk) gegen null gehen. Daraus resultieren für einen CEM I mit 95-100 % Klinkeranteil gemäß DIN EN 197-1 schon bei geringen Zementfeinheiten von weniger als 600 m²/kg nach Blaine, vorzugsweise aber weniger als 500 m²/kg nach Blaine, 2-Tages-Anfangsfestigkeiten von deutlich über 30 MPa, insbesondere über 40 MPa, bevorzugt aber über 50 MPa, und 28-Tages-Normfestigkeiten von deutlich über 50 MPa, insbesondere über 60 MPa, bevorzugt aber über 70 MPa.

Zur Einstellung einer überstöchiometrischen Verbrennung wird die gesamte Sauerstoffzufuhr in die Verbrennungsprozesse, insbesondere die Sauerstoffzufuhr in den Kalzinator 14 und die Sauerstoffzufuhr in den Ofen 16, eingestellt. Vorzugweise ist eine Messeinrichtung zum Ermitteln des Sauerstoffgehalts in dem Vorwärmer 12, vorzugsweise in dem Vorwärmergas in Gasströmungsrichtung hinter der zweiten Zyklonstufe angeordnet, wobei die erste Zyklonstufe die oberste Zyklonstufe ist. Die Menge an Sauerstoff, die insgesamt den Verbrennungsprozessen innerhalb des Kalzinators 14 und des Ofens 16 zugeführt wird, wird in Abhängigkeit des ermittelten Sauerstoffgehalts nach der zweiten Zyklonstufe, der Menge an Brennstoff, die den Verbrennungsprozessen zugeführt wird und vorzugsweise der Menge an Rohmehl, die in den Vorwärmer eingeleitet wird, gesteuert/ geregelt, sodass eine überstöchiometrische Verbrennung innerhalb des Kalzinators 14 und des Ofens 16 erfolgt.

Die ermittelte Gesamtmenge an Sauerstoff wird in Abhängigkeit der ermittelten Temperatur innerhalb des Ofens 16, insbesondere innerhalb der Sinterzone 32, auf den Ofen 16 und den Kalzinator 14 aufgeteilt. Die Steuerungseinrichtung 62 ist derart ausgebildet, dass sie die Menge an Sauerstoff, die in den Ofen 16 und/ oder den Kalzinator 14 strömt, derart aufteilt, dass die Summe der gesamten Sauerstoffmenge entspricht, die für eine überstöchiometrische Verbrennung notwendig ist.

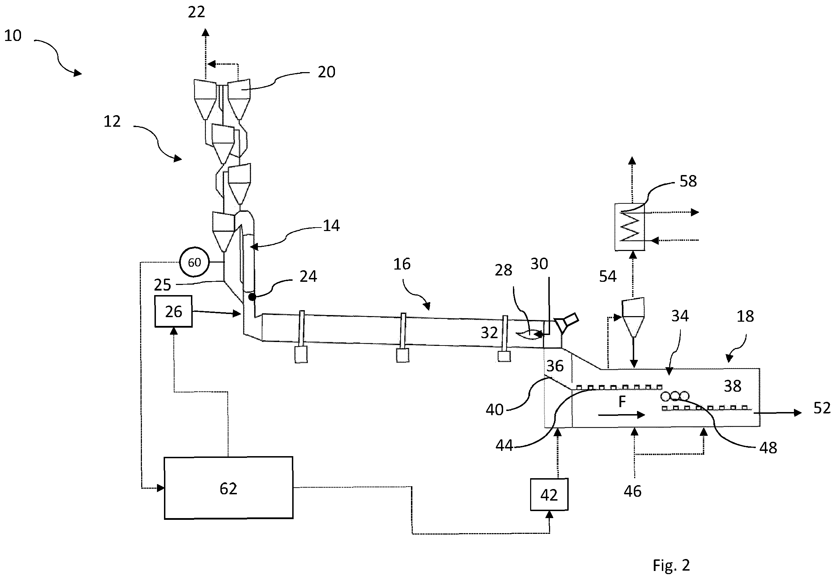

Fig. 2 zeigt ein weiteres Ausführungsbeispiel einer Zementherstellungsanlage, das größtenteils dem Ausführungsbeispiel der Fig. 1 entspricht und wobei gleiche Elemente mit gleichen Bezugszeigen versehen sind. Im Unterschied zu dem Ausführungsbeispiel der Fig. 1 ist die Temperaturmesseinrichtung 60 beispielhaft in dem Materialeinlass 25 des Ofens 16 angeordnet. Die Temperaturmesseinrichtung 60 ist vorzugsweise derart ausgebildet, dass sie die Temperatur des in den Ofen 16 eintretenden Materials ermittelt. Die ermittelte Temperatur wird an die Steuerungseinrichtung 62 übermittelt und dient insbesondere zur Regelung der Sauerstoffzufuhr in den Ofen und/ oder den Kalzinator, wie vorangehend mit Bezug auf Fig. 1 beschrieben. Es ist ebenfalls denkbar, dass die Temperaturmesseinrichtung 60 derart ausgebildet ist, dass sie sowohl die Temperatur in dem Materialeinlass 25 und der Sinterzone 32 des Ofens 16 ermittelt und an die Steuerungseinrichtung 62 übermittelt.

Zusätzlich zu der Temperatur in der Sinterzone 32 und/oder dem Materialeinlass 25 des Ofens 16 ist es ebenfalls denkbar, dass weitere Parameter, wie beispielsweise die Brennstoffzufuhr zu dem Kalzinator 14 und/ oder dem Ofen 16, die Rohmehlzufuhr in den Vorwärmer 12 oder der Anteil an Stickoxiden in dem Ofenabgas, dem Kalzinatorabgas oder dem Vorwärmerabgas ermittelt und an die Steuerungseinrichtung 62 übermittelt werden. Die Sauerstoffzufuhr in den Ofen 16 und/ oder den Kalzinator wird beispielsweise in Abhängigkeit der vorangehend genannten Parameter gesteuert.

Beispielsweise wird zusätzlich die Stromaufnahme des Ofens 16 ermittelt und an die Steuerungseinrichtung übermittelt. Diese liefert einen Hinweis auf den Ofenbetrieb und die Notwendigkeit eines Regeleingriffes. Beispielsweise wird die Sauerstoffzufuhr in den Ofen zusätzlich in Abhängigkeit der Stromaufnahme des Ofens 16 von der Steuerungseinrichtung 62 geregelt.

### Bezugszeichenliste

- 10: Zementherstellungsanlage
- 12: Vorwärmer
- 14: Kalzinator
- 16: Ofen
- 18: Kühler
- 20: Zyklon
- 22: Vorwärmerabgas
- 24: Brennstoffeinlass des Kalzinators
- 25: Materialeinlass in den Ofen
- 26: Verbrennungsgaseinlass des Kalzinators
- 28: Brenner des Ofens
- 30: Brennstoffeinlass des Ofens
- 32: Sinterzone
- 34: Kühlgasraum
- 36: erster Kühlgasraumabschnitt
- 38: zweiter Kühlgasraumabschnitt
- 40: statischer Rost
- 42: erster Kühlgasstrom
- 44: dynamischer Rost
- 46: zweiter Kühlgasstrom
- 48: Zerkleinerungseinrichtung
- 50: dynamischer Rost 50
- 52: Kaltklinker
- 54: Kühlerabluft
- 56: Abscheider
- 58: Wärmetauscher
- 60: Temperaturmesseinrichtung
- 62: Steuerungseinrichtung

## Patentansprüche

1. Verfahren zum Herstellen von Zementklinker aufweisend die Schritte:
Vorwärmen von Rohmehl in einem Vorwärmer (12),
Kalzinieren des vorgewärmten Rohmehls in einem Kalzinator (14),
Brennen des vorgewärmten und kalzinierten Rohmehls in einem Ofen (16) zu Zementklinker, wobei dem Ofen (16) ein Verbrennungsgas mit einem Sauerstoffanteil zugeführt und die Temperatur innerhalb des Ofens (16) ermittelt wird, und
Kühlen des Zementklinkers in einem Kühler (18),
**dadurch gekennzeichnet, dass**
die Sauerstoffzufuhr in den Ofen (16) in Abhängigkeit der ermittelten Temperatur innerhalb des Ofens (16) geregelt wird,
wobei die ermittelte Temperatur mit einem Sollwert verglichen wird und bei einer Abweichung der ermittelten Temperatur von dem Sollwert die Sauerstoffzufuhr in den Ofen (16) und/ oder in den Kalzinator (14) erhöht oder verringert wird, und
wobei der Sollwert in Abhängigkeit der Partikelgrößenverteilung und/ oder des Kalkstandards eingestellt wird.

2. Verfahren nach Anspruch 1, wobei die Temperatur innerhalb des Ofens (16) direkt mittels einer Temperaturmesseinrichtung (60) oder indirekt mittels Prozessparametern, wie insbesondere der Stickoxidgehalt in dem Ofen (16), die Stromaufnahme des Ofens (16), der Sauerstoffgehalt in dem Ofen (16), die Brennstoffzufuhr in den Ofen (16), die Außentemperatur der Ofenwand und/oder die Rohmehlzufuhr in den Vorwärmer (12), ermittelt wird.

3. Verfahren nach einem der vorangehenden Ansprüche, wobei die Sauerstoffzufuhr in den Ofen (16) und in den Kalzinator (14) derart eingestellt wird, dass eine überstöchiometrische, insbesondere nahstöchiometrische Verbrennung in dem Kalzinator (14) und dem Ofen (16) erfolgt.

4. Verfahren nach einem der vorangehenden Ansprüche, wobei dem Ofen (16) ein Brennstoff zugeführt wird und die Zufuhr des Brennstoffs in Abhängigkeit der ermittelten Temperatur innerhalb des Ofens (16) geregelt wird.

5. Verfahren nach einem der vorangehenden Ansprüche, wobei der Kühler (18) einen Kühlgasraum (34) aufweist, durch den ein Kühlgasstrom zum Kühlen des Schüttguts im Querstrom strömbar ist, wobei der Kühlgasraum (34), einen ersten Kühlgasraumabschnitt (36) mit einem ersten Kühlgasstrom (42) und einen sich in Förderrichtung des Klinkers an diesen anschließenden zweiten Kühlgasraumabschnitt (38) mit einem zweiten Kühlgasstrom (46) umfasst, wobei das dem Ofen (16) zugeführte Verbrennungsgas durch den ersten Kühlgasstrom (42) gebildet wird und wobei die Zufuhr des Verbrennungsgases in Abhängigkeit der ermittelten Temperatur innerhalb des Ofens (16) geregelt wird.

6. Verfahren nach einem der vorangehenden Ansprüchen, wobei der Ofen (16) eine Mehrzahl von Verbrennungsgaseinlässen aufweist, durch welche das Verbrennungsgas in den Ofen (16) eingeleitet wird, wobei die Zufuhr von Verbrennungsgas zu den jeweiligen Verbrennungsgaseinlässen jeweils in Abhängigkeit der ermittelten Temperatur innerhalb des Ofens (16) gesteuert wird.

7. Verfahren nach einem der vorangehenden Ansprüche, wobei die Brennstoffmenge, die in den Ofen (16) und den Kalzinator (14) aufgegeben wird, der Anteil an Stickoxiden in dem Ofenabgas, der Anteil an Sauerstoff in dem Ofenabgas, die Menge an in den Vorwärmer aufgegebenes Rohmehl ermittelt wird und die Sauerstoffzufuhr zu dem Ofen (16) und/ oder dem Kalzinator (14) in Abhängigkeit von zumindest einem der ermittelten Werte geregelt wird.

8. Verfahren nach einem der vorangehenden Ansprüche, wobei das Ermitteln der Temperatur innerhalb des Ofens (16) und/ oder des Materialeinlasses (25) des Ofens (16), das Ermitteln der Temperatur der Gasphase, der Wandinnenfläche und/oder des Klinkers innerhalb der Sinterzone (32) umfasst und wobei die Ermittlung der Temperatur kontaktlos erfolgt.

9. Zementherstellungsanlage (10) aufweisend
- einen Vorwärmer (12) zum Vorwärmen von Rohmehl,
- einen Kalzinator (14) zum Kalzinieren des vorgewärmten Rohmehls,
- einen Ofen (16) zum Bennen des Rohmehls zu Zementklinker, wobei der Ofen (16) eine Temperaturmesseinrichtung (60) zur Ermittlung der Temperatur innerhalb des Ofens (16) und einen Verbrennungsgaseinlass zum Einlassen eines Verbrennungsgases mit einem Sauerstoffanteil in den Ofen (16) aufweist, und
- einen Kühler (18) zum Kühlen des Zementklinkers,
**dadurch gekennzeichnet, dass**
die Zementherstellungsanlage eine Steuerungseinrichtung (62) aufweist, die mit der Temperaturmesseinrichtung und dem Verbrennungsgaseinlass verbunden ist und derart ausgebildet ist, dass sie die Sauerstoffzufuhr in den Ofen (16) in Abhängigkeit der ermittelten Temperatur innerhalb des Ofens (16) steuert, wobei die Steuerungseinrichtung (62) derart ausgebildet ist, dass sie die ermittelte Temperatur in dem Ofen (16) mit einem Sollwert vergleicht und bei einer Abweichung der ermittelten Temperatur von dem Sollwert die Sauerstoffzufuhr in den Ofen (16) und/ oder in den Kalzinator (14) erhöht oder verringert und
wobei der Sollwert in Abhängigkeit der Partikelgrößenverteilung und/ oder des Kalkstandards eingestellt ist.

10. Zementherstellungsanlage nach Anspruch 9, wobei der Vorwärmer (12) eine mit der Steuerungseinrichtung (62) verbundene Sauerstoffmesseinrichtung zum Ermitteln des Sauerstoffgehalts des durch den Vorwärmer (12) strömenden Gases aufweist und wobei die Steuerungseinrichtung (62) derart ausgebildet ist, dass sie die Sauerstoffzufuhr zu dem Kalzinator (14) und dem Ofen (16) derart steuert, dass in dem Ofen (16) und dem Kalzinator (14) eine stöchiometrische oder überstöchiometrische Verbrennung erfolgt.

11. Zementherstellungsanlage nach einem der Ansprüche 9 oder 10, wobei der Kalzinator (14) und der Ofen (16) jeweils ein Mittel zur Zuführung von Brennstoff in jeweils den Ofen (16) und den Kalzinator (14) aufweist und wobei die Steuerungseinrichtung (62) mit dem Mittel verbunden ist und derart ausgebildet ist, dass sie die Zufuhr an Brennstoff in den Kalzinator (14) und/ oder den Ofen (16) in Abhängigkeit der ermittelten Temperatur innerhalb des Ofens (16) steuert.

12. Zementherstellungsanlage nach eine der Ansprüche 9 bis 11, wobei der Ofen (16) eine Mehrzahl von Verbrennungsgaseinlässen aufweist, durch welche das Verbrennungsgas in den Ofen (16) eingeleitet wird, wobei die Steuerungseinrichtung (62) derart ausgebildet ist, dass sie die Zufuhr von Verbrennungsgas zu den jeweiligen Verbrennungsgaseinlässen jeweils in Abhängigkeit der ermittelten Temperatur innerhalb des Ofens (16) steuert.

13. Zementherstellungsanlage nach eine der Ansprüche 9 bis 12, wobei die Temperaturmesseinrichtung derart ausgebildet ist, eine kontaktlose Temperaturmessung der Innenfläche der Ofenwand und/oder des Klinkers innerhalb der Sinterzone durchzuführen.

## Claims

1. Method for producing cement clinker having the steps of:
preheating raw meal in a preheater (12),
calcining the preheated raw meal in a calciner (14), firing the preheated and calcined raw meal in a furnace (16) to form cement clinker, wherein the furnace (16) is fed with a combustion gas comprising a proportion of oxygen and the temperature within the furnace (16) is ascertained, and
cooling the cement clinker in a cooler (18),
**characterized in that**
the feed of oxygen into the furnace (16) is regulated depending on the ascertained temperature within the furnace (16),
wherein the ascertained temperature is compared with a target value and in the event of a deviation of the ascertained temperature from the target value the feed of oxygen into the furnace (16) and/or into the calciner (14) is increased or decreased, and
wherein the target value is set depending on the particle size distribution and/or on the lime standard.

2. Method according to Claim 1, wherein the temperature within the furnace (16) is ascertained directly by means of a temperature measuring device (60) or indirectly by means of process parameters, such as in particular the nitrogen oxide content in the furnace (16), the power draw of the furnace (16), the oxygen content in the furnace (16), the feed of fuel into the furnace (16), the external temperature of the furnace wall and/or the feed of raw meal into the preheater (12).

3. Method according to either of the preceding claims, wherein the feed of oxygen into the furnace (16) and into the calciner (14) is set such that a superstoichiometric, in particular near-stoichiometric, combustion takes place in the calciner (14) and in the furnace (16).

4. Method according to any of the preceding claims, wherein the furnace (16) is fed with a fuel and the feed of the fuel is regulated depending on the ascertained temperature within the furnace (16).

5. Method according to any of the preceding claims, wherein the cooler (18) has a cooling gas space (34) through which a cooling gas stream for cooling the bulk material can flow in crossflow, wherein the cooling gas space (34) comprises a first cooling gas space section (36) having a first cooling gas stream (42) and a second cooling gas space section (38) adjoining the first cooling gas space section (36) in the conveying direction of the clinker and having a second cooling gas stream (46), wherein the combustion gas fed to the furnace (16) is formed by the first cooling gas stream (42) and wherein the feed of the combustion gas is regulated depending on the ascertained temperature within the furnace (16).

6. Method according to any of the preceding claims, wherein the furnace (16) has a plurality of combustion gas inlets through which the combustion gas is introduced into the furnace (16), wherein the feed of combustion gas to the respective combustion gas inlets is in each case controlled depending on the ascertained temperature within the furnace (16).

7. Method according to any of the preceding claims, wherein the amount of fuel that is delivered to the furnace (16) and the calciner (14), the proportion of nitrogen oxides in the furnace offgas, the proportion of oxygen in the furnace offgas, the amount of raw meal delivered to the preheater, is ascertained, and the feed of oxygen to the furnace (16) and/or to the calciner (14) is regulated depending on at least one of the ascertained values.

8. Method according to any of the preceding claims, wherein the ascertainment of the temperature within the furnace (16) and/or the material inlet (25) of the furnace (16) comprises the ascertainment of the temperature of the gas phase, of the wall inner surface and/or of the clinker within the sintering zone (32) and wherein the temperature is ascertained contactlessly.

9. Cement production plant (10) having
- a preheater (12) for preheating raw meal,
- a calciner (14) for calcining the preheated raw meal,
- a furnace (16) for firing the raw meal to form cement clinker, wherein the furnace (16) has a temperature measuring device (60) for ascertaining the temperature within the furnace (16) and a combustion gas inlet for admitting a combustion gas comprising a proportion of oxygen into the furnace (16), and
- a cooler (18) for cooling the cement clinker,
**characterized in that**
the cement production plant has a control device (62) which is connected to the temperature measuring device and the combustion gas inlet and is designed such that it controls the feed of oxygen into the furnace (16) depending on the ascertained temperature within the furnace (16),
wherein the control device (62) is designed such that it compares the ascertained temperature in the furnace (16) with a target value and in the event of a deviation of the ascertained temperature from the target value increases or decreases the feed of oxygen into the furnace (16) and/or into the calciner (14), and wherein the target value is set depending on the particle size distribution and/or on the lime standard.

10. Cement production plant according to Claim 9, wherein the preheater (12) has an oxygen measuring device, connected to the control device (62), for ascertaining the oxygen content in the gas flowing through the preheater (12), and wherein the control device (62) is designed such that it controls the feed of oxygen to the calciner (14) and the furnace (16) in such a way that a stoichiometric or superstoichiometric combustion takes place in the furnace (16) and the calciner (14).

11. Cement production plant according to either of Claims 9 and 10, wherein the calciner (14) and the furnace (16) each have a means for feeding fuel into each of the furnace (16) and calciner (14) and wherein the control device (62) is connected to the means and is designed such that it controls the feed of fuel into the calciner (14) and/or the furnace (16) depending on the ascertained temperature within the furnace (16).

12. Cement production plant according to any of Claims 9 to 11, wherein the furnace (16) has a plurality of combustion gas inlets through which the combustion gas is introduced into the furnace (16), wherein the control device (62) is designed such that it controls the feed of combustion gas to the respective combustion gas inlets in each case depending on the ascertained temperature within the furnace (16).

13. Cement production plant according to any of Claims 9 to 12, wherein the temperature measuring device is designed so as to perform contactless temperature measurement of the inner surface of the furnace wall and/or of the clinker within the sintering zone.

## Revendications

1. Procédé de production de clinker de ciment comprenant les étapes suivantes :
préchauffer de la farine crue dans un préchauffeur (12),
calciner la farine crue préchauffée dans un calcinateur (14),
brûler la farine crue préchauffée et calcinée dans un four (16) pour former du clinker de ciment, un gaz de combustion ayant une teneur en oxygène étant amené au four (16) et la température à l'intérieur du four (16) étant déterminée, et
refroidir le clinker de ciment dans un refroidisseur (18),
**caractérisé en ce que**
l'amenée d'oxygène dans le four (16) est régulée en fonction de la température déterminée à l'intérieur du four (16) ;
la température déterminée étant comparée à une valeur cible et, en cas d'écart entre la température déterminée et la valeur cible, l'amenée d'oxygène dans le four (16) et/ou dans le calcinateur (14) étant augmentée ou réduite, et
la valeur cible étant réglée en fonction de la distribution granulométrique et/ou de la norme de chaux.

2. Procédé selon la revendication 1, la température à l'intérieur du four (16) étant déterminée directement au moyen d'un dispositif de mesure de température (60) ou indirectement au moyen de paramètres de processus, tels que notamment la teneur en oxyde d'azote dans le four (16), la consommation électrique du four (16), la teneur en oxygène dans le four (16), l'amenée de combustible dans le four (16), la température extérieure de la paroi du four et/ou l'amenée de farine crue dans le préchauffeur (12).

3. Procédé selon l'une des revendications précédentes, l'amenée d'oxygène dans le four (16) et dans le calcinateur (14) étant réglée de manière à effectuer une combustion sur-stœchiométrique, en particulier quasi-stœchiométrique, dans le calcinateur (14) et dans le four (16).

4. Procédé selon l'une des revendications précédentes, un combustible étant amené au four (16) et l'amenée du combustible étant régulée en fonction de la température déterminée à l'intérieur du four (16).

5. Procédé selon l'une des revendications précédentes, le refroidisseur (18) comportant un espace de gaz de refroidissement (34) à travers lequel un courant de gaz de refroidissement peut s'écouler en flux transversal pour refroidir le produit en vrac, l'espace de gaz de refroidissement (34) comprenant une première portion d'espace de gaz de refroidissement (36) comportant un premier flux de gaz de refroidissement (42) et une deuxième portion d'espace de gaz de refroidissement (38) contiguë à celle-ci dans la direction de transport du clinker et comportant un deuxième flux de gaz de refroidissement (46), le gaz de combustion amené au four (16) étant formé par le premier flux de gaz de refroidissement (42) et l'amenée de gaz de combustion étant régulée en fonction de la température déterminée à l'intérieur du four (16).

6. Procédé selon l'une des revendications précédentes, le four (16) comportant une pluralité d'entrées de gaz de combustion par lesquelles le gaz de combustion est introduit dans le four (16), l'amenée de gaz de combustion aux entrées de gaz de combustion respectives étant commandée à chaque fois en fonction de la température déterminée à l'intérieur du four (16) .

7. Procédé selon l'une des revendications précédentes, la quantité de combustible introduite dans le four (16) et le calcinateur (14), la proportion d'oxydes d'azote dans les gaz d'échappement du four, la proportion d'oxygène dans l'effluent gazeux du four, la quantité de farine crue introduite dans le préchauffeur étant déterminées et l'amenée d'oxygène dans le four (16) et/ou dans le calcinateur (14) étant régulée en fonction d'au moins une des valeurs déterminées.

8. Procédé selon l'une des revendications précédentes, la détermination de la température à l'intérieur du four (16) et/ou de l'entrée de matériau (25) du four (16) comprenant la détermination de la température de la phase gazeuse, de la surface intérieure de paroi et/ou du clinker à l'intérieur de la zone de frittage (32) et la détermination de la température étant effectuée sans contact.

9. Installation de production de ciment (10) comportant
- un préchauffeur (12) destiné à préchauffer la farine crue,
- un calcinateur (14) destiné à calciner la farine crue préchauffée,
- un four (16) destinée à brûler la farine crue pour former du clinker de ciment, le four (16) comportant un dispositif de mesure de température (60) destiné à déterminer la température à l'intérieur du four (16) et une entrée de gaz de combustion destinée à introduire un gaz de combustion ayant une teneur en oxygène dans le four (16), et
- un refroidisseur (18) destiné à refroidir le clinker de ciment,
**caractérisée en ce que**
l'installation de production de ciment comporte un dispositif de commande (62), qui est relié au dispositif de mesure de température et à l'entrée de gaz de combustion et qui est conçu de manière à commander l'amenée d'oxygène dans le four (16) en fonction de la température déterminée à l'intérieur du four (16),
le dispositif de commande (62) étant conçu de manière à comparer la température déterminée dans le four (16) à une valeur cible et, en cas d'écart entre la température déterminée et la valeur cible, augmenter ou réduire l'amenée d'oxygène dans le four (16) et/ou dans le calcinateur (14) et
la valeur cible étant réglée en fonction de la distribution granulométrique et/ou de la norme de chaux.

10. Installation de production de ciment selon la revendication 9, le préchauffeur (12) comportant un dispositif de mesure d'oxygène relié au dispositif de commande (62) et destiné à déterminer la teneur en oxygène du gaz s'écoulant à travers le préchauffeur (12) et le dispositif de commande (62) étant conçu de manière à commander l'amenée d'oxygène dans le calcinateur (14) et dans le four (16) de manière à effectuer une combustion stœchiométrique ou sur-stœchiométrique dans le four (16) et dans le calcinateur (14).

11. Installation de production de ciment selon l'une des revendications 9 et 10, le calcinateur (14) et le four (16) comprenant chacun un moyen d'amenée de combustible dans le four (16) et dans le calcinateur (14), et le dispositif de commande (62) étant relié au moyen et étant conçu de manière à commander l'amenée de combustible dans le calcinateur (14) et/ou dans le four (16) en fonction de la température déterminée à l'intérieur du four (16).

12. Installation de production de ciment selon l'une des revendications 9 à 11, le four (16) comportant une pluralité d'entrées de gaz de combustion par lesquelles le gaz de combustion est introduit dans le four (16), le dispositif de commande (62) étant conçu de manière à commander l'amenée de gaz de combustion aux entrées de gaz de combustion respectives en fonction de la température déterminée à l'intérieur du four (16).

13. Installation de production de ciment selon l'une des revendications 9 à 12, le dispositif de mesure de température étant conçu de manière à effectuer une mesure de température sans contact de la surface intérieure de la paroi du four et/ou du clinker à l'intérieur de la zone de frittage.
